# EUROPEAN PATENT APPLICATION

(11) **EP 4 657 188 A1**
(43) Date of publication of application: **03.12.2025**
(21) Application number: 24178953.6
(22) Date of filing: 29.05.2024
(51) Int. Cl.: G05B 19/418, H04W 76/11, H04W 12/50

(54) **INDUSTRIAL COMMUNICATION METHOD AND SYSTEM**

(71) Applicant: Evosoft Hungary Szamitastechnikai Kft., 1111 Budapest (HU)
(72) Inventor: Barabási, Zoltán, 1094 Budapest (HU); Eisenberger, Tamas, 1171 Budapest (HU)
(74) Representative: Siemens Patent Attorneys

(57) **Abstract**

The invention relates to an industrial communication method, wherein at least one mobile device is configured to communicate with at least one industrial apparatus, wherein the method comprises the steps of: Generating a dedicated label for the at least one industrial apparatus and assigning the label to the at least one industrial apparatus, capturing the label with the at least one mobile device, establishing a communication between the at least one mobile device and at least one communication server (9), wherein the label regarding the at least one industrial apparatus is recognized by the at least one communication server (9), and, based on recognizing the label by the at least one communication server (9), activating a communication connection between the at least one mobile device and the at least one industrial apparatus.

## Description

The invention relates to an industrial communication method, wherein at least one mobile device, in particular at least one mobile phone, is configured to communicate with at least one industrial apparatus, in particular at least one machine.

### Background of the invention

Mobile devices are common for industrial purposes (e.g. in the manufacturing industry etc.). Computerized Numerical Control (CNC) machines and manufacturing processes are more and more autonomous, resulting in changing tasks for machine operators. Mobile devices can e.g. be implemented into a CNC machine environment e.g. on a shop floor to increase productivity or reduce manufacturing efforts. For instance, notifications may be sent to mobile devices to indicates that a task is completed, that tools are reaching their ends of lifetime or, e.g. by utilizing a camera, that resources are needed for production (e.g. CNC tools or numerical control programs etc.). The utilization of mobile devices (e.g. mobile phones) for such tasks requires an appropriate selection and configuration (e.g. due to technical performance or cyber security reasons etc.) of said devices. A great number of devices may have to be available and assigned to a specified number of operators. Furthermore, a constant assignment of machines to operators and mobile devices may be required. The provision of notifications by the machines to the operators and the mobile devices may be appropriately controlled to e.g. ensure that the right operator receives the right notification at the right time etc.

Known from the state of the art is e.g. document EP 4 009 207 A1 which discloses an apparatus for controlling access to a device (e.g. a robot) in an industrial or production plant or an automation network.

### Summary of the invention

An object of the herein described invention is to enable an unambiguous connection between the at least one industrial apparatus and an operator via the at least one mobile device.

This problem is solved by the subject matter of claim 1, wherein the following steps are comprised: Generating a dedicated label for the at least one industrial apparatus and assigning the label to the at least one industrial apparatus, capturing the label with the at least one mobile device, establishing a communication between the at least one mobile device and at least one communication server, wherein the label regarding the at least one industrial apparatus is recognized by the at least one communication server, and, based on recognizing the label by the at least one communication server, activating a communication connection between the at least one mobile device and the at least one industrial apparatus.

With this solution, a clear assignment between the industrial apparatus and an operator via the mobile device can be established. Unintentional interferences caused by different operators trying to operate the industrial apparatus simultaneously can be avoided. The solution also opens the possibility to restrict the access of an operator to the industrial apparatus to a specified time limit which can e.g. correspond with the duration of a shift of the operator.

After the shift, e.g. the operator does not receive any more notifications from the industrial apparatus, does not have authorization to operate the industrial apparatus and/or can hand over the industrial apparatus.

The communication between the mobile device and the communication server and/or the communication connection between the mobile device and the industrial apparatus can e.g. be conducted by means of radio connections. The communication connection between the mobile device and the industrial apparatus can e.g. be a direct connection between the mobile device and the industrial apparatus or it can be routed via the communication server etc.

There can e.g. be a plurality of mobile devices communicating in different, dedicated time periods with a plurality of industrial apparatuses. It is also possible that the dedicated label refers to a plurality of industrial apparatuses assigned to the mobile device which e.g. the operator has to operate during the shift.

The at least one mobile device is implemented as mobile communication device.

Further preferred solutions are described by the dependent claims.

The herein described disclosure further comprises an industrial communication system configured to perform the inventive method, with at least one mobile device, in particular at least one mobile phone, at least one industrial apparatus, in particular at least one machine, and at least one communication server, wherein the at least one mobile device is configured to communicate with the at least one industrial apparatus, wherein the system is configured to generate a dedicated label for the at least one industrial apparatus and to assign the label to the at least one industrial apparatus, to capture the label with the at least one mobile device, to establish a communication between the at least one mobile device and the at least one communication server, wherein the label regarding the at least one industrial apparatus is recognized by the at least one communication server, and, based on recognizing the label by the at least one communication server, to activate a communication connection between the at least one mobile device and the at least one industrial apparatus.

This solution enables an effective, efficient as well as reliable operation of an industrial environment (e.g. a production site or plant).

### Brief description of the drawings

The invention will further be explained based on at least one example of the invention with respect to the exemplary drawings, wherein:
- Fig. 1: schematically depicts an example of an industrial communication method according to the invention, and
- Fig. 2: schematically discloses an example of an industrial communication system according to the invention.

### Detailed exemplary embodiments of the invention

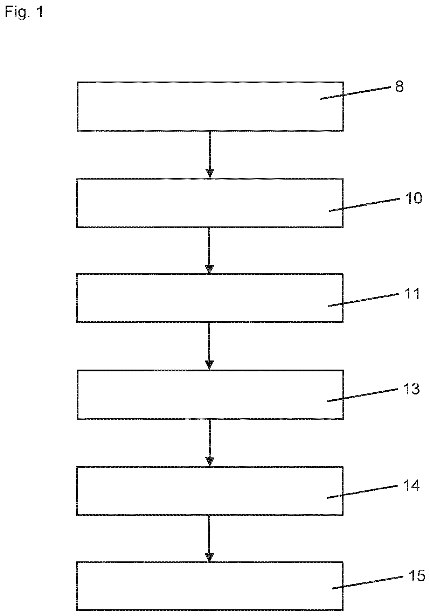

Fig. 1 schematically discloses an example of an industrial communication method according to the invention as a flow chart.

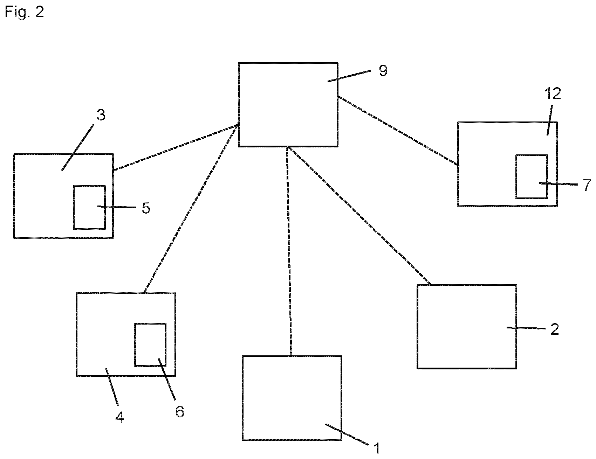

A first mobile device 1, exemplarily shown in Fig. 2, is implemented as mobile phone (i.e. as a mobile communication device) and is configured to communicate with a first industrial apparatus 3, exemplarily shown in Fig. 2, which is implemented as computerized numerical control machine, i.e. as machine tool. According to the method, a dedicated first label 5, which is exemplarily shown in Fig. 2 and which is a one-time-use label (i.e. which expires after a use during a specified time interval), for the first industrial apparatus 3 is generated (label generation 8) by a communication server 9 which is implemented as an industrial computer and is exemplarily shown in Fig. 2. Then, the first label 5 is assigned to the first industrial apparatus 3, wherein the first label 5 is transmitted electronically by radio connection means from the communication server 9 to the first industrial apparatus 3 (label assignment 10). The first label 5 is displayed on a display of the first industrial apparatus 3 (label display 11). According to the invention, it is also possible, that e.g. the first label 5 is displayed on an office computational device 12 (e.g. on a screen of a desktop computer etc.) which is exemplarily shown in Fig. 2 thus.

Thereafter, the first label 5 is captured with the first mobile device 1, establishing a communication between the first mobile device 1 and the communication server 9 via radio connection means (label capturing 13). The first label 5 contains a QR-code which is scanned by the first mobile device 1 as well as a uniform resource locator via which the first industrial apparatus 3 is accessible for the first mobile device 1.

Then, the first label 5 is transmitted from the first mobile device 1 to the communication server 9 and assessed as well as recognized by the at least one communication server 9 (label recognition 14). Based on recognizing the first label 5 by the communication server 9, a first communication connection between the first mobile device 1 and the first industrial apparatus 3 is activated (communication activation 15). Said first communication connection is a radio connection.

The first communication connection between the first mobile device 1 and the first industrial apparatus 3 is active for a specified and limited time period, wherein the first communication connection between the first mobile device 1 and the first industrial apparatus 3 is deactivated upon expiration of the specified and limited first time period. Said first time period corresponds with the duration of the shift of an operator (duration of 8h) of the first industrial apparatus 3.

Via the first communication connection between the first mobile device 1 and the first industrial apparatus 3 first data concerning characteristics and status of the first industrial apparatus 3 as well as access credentials to access the first industrial apparatus 3 and characteristics of the first communication connection between the first mobile device 1 and the first industrial apparatus 3 is transferred from the first industrial apparatus 3 to the first mobile device 1. Furthermore, via the first communication connection between the first mobile device 1 and the first industrial apparatus 3 second data concerning the adjustment and the control of the first industrial apparatus 3 is transferred from the first mobile device 1 to the first industrial apparatus 3. Accordingly, the operator can adjust and control the first industrial apparatus 3 in a dedicated manner without interferences which is unambiguously assigned to him/her and to his/her first mobile device 1 for the duration of his/her shift.

However, the first data and the second data are subsets of a first data set comprising the first data and a second data set comprising the second data. The subsets are selected and provided according to the authorization of the operator.

Via a graphical user interface of the first mobile device 1, implemented as a touch display, the first data is displayed on the first mobile device 1 and the second data is entered into the first mobile device 1.

According to the invention, it is also possible that the first communication connection is activated between the first mobile device 1 and the first industrial apparatus 3 by generating, assigning to the first industrial apparatus 3, capturing by the first mobile device 1 and recognizing by the communication server 9 the dedicated first label 5 as described and, additionally, a second communication connection is activated between the first mobile device 1 and a second industrial apparatus 4 which is exemplarily disclosed in Fig. 2 by generating, assigning to the second industrial apparatus 4, capturing by the first mobile device 1 and recognizing by the communication server 9 a dedicated second label 6 which is exemplarily disclosed in Fig. 2.

As described, the first communication connection is activated between the first mobile device 1 and the first industrial apparatus 3 for said first time period by generating, assigning to the first industrial apparatus 3, capturing by the first mobile device 1 and recognizing by the communication server 9 said first label 5. After expiration of the first time period and deactivation of the first communication connection, a third communication connection is activated between a second mobile device 2 which is exemplarily shown in Fig. 2 and the first industrial apparatus 3 for a specified and limited second time period by generating, assigning to the first industrial apparatus 3, capturing by the second mobile device 2 and recognizing by the communication server 9 another dedicated label which is different from the first label 5.

Fig. 2 schematically discloses an example of an industrial communication system according to the invention.

Said industrial communication system is configured to perform a method according to Fig. 1. The industrial communication system comprises a first mobile device 1 and a second mobile device 2 implemented as mobile phones (i.e. as mobile communication devices), a first industrial apparatus 3 and a second industrial apparatus 4 implemented as computerized numerical control machines as well a communication server 9 implemented as an industrial computer.

The first mobile device 1 and the second mobile device 2 are configured to communicate with the first industrial apparatus 3 and the second industrial apparatus 4.

Said system is configured to generate a dedicated first label 5 for the first industrial apparatus 3 and to assign the first label 5 to the first industrial apparatus 3, to capture the first label 5 with the first mobile device 1, to establish a first communication between the first mobile device 1 and the communication server 9, wherein the first label 5 regarding the first industrial apparatus 3 is recognized by the communication server 9, and, based on recognizing the first label 5 by the communication server 9, to activate a first communication connection between the first mobile device 1 and the first industrial apparatus 3.

Said system is further configured to generate a dedicated second label 6 for the second industrial apparatus 4 and to assign the second label 6 to the second industrial apparatus 4, to capture the second label 6 with the first mobile device 1, to establish a second communication between the first mobile device 1 and the communication server 9, wherein the second label 6 regarding the second industrial apparatus 4 is recognized by the communication server 9, and, based on recognizing the second label 6 by the communication server 9, to activate a second communication connection between the first mobile device 1 and the second industrial apparatus 4.

Said system is further configured to generate a dedicated third label 7 for the first industrial apparatus 3 and the second industrial apparatus 4 and to assign the third label 7 to the first industrial apparatus 3 and the second industrial apparatus 4, to capture the third label 7 with the second mobile device 2, to establish a third communication between the second mobile device 2 and the communication server 9, wherein the third label 7 regarding the first industrial apparatus 3 and the second industrial apparatus 4 is recognized by the communication server 9, and, based on recognizing the third label 7 by the communication server 9, to activate a third communication connection between the second mobile device 2 and the first industrial apparatus 3 as well as to activate a fourth communication connection between the second mobile device 2 and the second industrial apparatus 4. However, the third communication connection and the fourth communication connection are only established when the first communication connection and the second communication connection are deactivated.

The first mobile device 1 is dedicated to a first operator operating the first industrial apparatus 3 and the second industrial apparatus 4 during a first shift. The second mobile device 2 is dedicated to a second operator operating the first industrial apparatus 3 and the second industrial apparatus 4 during a second shift.

The first label 5, the second label 6 and the third label 7 are implemented as different QR-codes. The first label 5 is displayed on a first display of the first industrial apparatus 3, the second label 6 is displayed on a second display of the second industrial apparatus 4 and the third label 7 is displayed on a third display of an office computational device 12 (a desktop computer).

The generation of the first label 5 and the second label 6 by the communication server 9 is initiated via the first mobile device 1 from which respective initiation signals can be sent to the communication server 9 by an operating action of the first operator.

The generation of the third label 7 by the communication server 9 is initiated via the office computational device 12 from which respective initiation signals can be sent to the communication server 9 by an operating action of the second operator.

The first industrial apparatus 3 and the second industrial apparatus 4 are arranged on a shop floor in a production environment, the office computational device 12 is arranged in an office environment.

Via the office computational device 12 a bundled assignment of a plurality of industrial apparatuses to a mobile device for a specified and limited time period based on a single label is possible. The office computational device 12 is connected to the communication server 9 via radio connection means. Via the office computational device 12 an operator can select the industrial apparatuses required for the assignment and can initiate the generation of the label by the communication server 9.

The first industrial apparatus 3, the second industrial apparatus 4, the first mobile device 1, the second mobile device 2, the communication server 9 and the office computational device 12 comprise processors, memories, connecting means as well as displays and are equipped with computer program products to establish connections capable of data transfer. The first mobile device 1 and the second mobile device 2 comprises cameras to scan the first label 5, the second label 6 and/or the third label 7. The first communication, the second communication, the third communication, the first communication connection, the second communication connection, the third communication connection and the fourth communication connection are established as radio communication and radio connections respectively routed via the communication server 9. However, according to the invention also a direct communication between the first mobile device 1 and the second mobile device 2 on the one hand and the first industrial apparatus 3 and the second industrial apparatus 4 on the other hand is possible.

*Independent of the grammatical term usage, individuals with male, female or other gender identities are included within the term.*

### List of Reference

- 1: First mobile device
- 2: Second mobile device
- 3: First industrial apparatus
- 4: Second industrial apparatus
- 5: First label
- 6: Second label
- 7: Third label
- 8: Label generation
- 9: Communication server
- 10: Label assignment
- 11: Label display
- 12: Office computational device
- 13: Label capturing
- 14: Label recognition
- 15: Communication activation

## Claims

1. Industrial communication method, wherein at least one mobile device, in particular at least one mobile phone, is configured to communicate with at least one industrial apparatus, in particular at least one machine, the method being **characterised in that** it comprises the steps of: Generating a dedicated label for the at least one industrial apparatus and assigning the label to the at least one industrial apparatus, capturing the label with the at least one mobile device, establishing a communication between the at least one mobile device and at least one communication server (9), wherein the label regarding the at least one industrial apparatus is recognized by the at least one communication server (9), and, based on recognizing the label by the at least one communication server (9), activating a communication connection between the at least one mobile device and the at least one industrial apparatus.

2. Industrial communication method according to claim 1, **characterised in that** the label is displayed on the at least one industrial apparatus and/or on at least one office computational device (12).

3. Industrial communication method according to claim 1 or 2, **characterised in that** the label is or contains a code, in particular a QR-code which is scanned by the at least one mobile device.

4. Industrial communication method according to one of the claims 1 to 3, **characterised in that** the communication connection between the at least one mobile device and the at least one industrial apparatus is active for a specified and limited time period, wherein the communication connection between the at least one mobile device and the at least one industrial apparatus is deactivated upon expiration of the specified and limited time period.

5. Industrial communication method according to one of the claims 1 to 4, **characterised in that** via the communication connection between the at least one mobile device and the at least one industrial apparatus first data concerning characteristics and/or status of the at least one industrial apparatus and/or access credentials to access the at least one industrial apparatus and/or characteristics of the communication connection between the at least one mobile device and the at least one industrial apparatus is transferred from the at least one industrial apparatus to the at least one mobile device.

6. Industrial communication method according to one of the claims 1 to 5, **characterised in that** via the communication connection between the at least one mobile device and the at least one industrial apparatus second data concerning the adjustment and/or the control of the at least one industrial apparatus is transferred from the at least one mobile device to the at least one industrial apparatus.

7. Industrial communication method according to claim 5 or 6, **characterised in that** the first data and/or the second data are subsets/is a subset of a first data set comprising the first data and/or a second data set comprising the second data.

8. Industrial communication method according to one of the claims 5 to 7, **characterised in that** via a graphical user interface of the at least one mobile device, the first data is displayed and/or the second data is entered.

9. Industrial communication method according to one of the claims 1 to 8, **characterised in that** the label is a one-time-use label.

10. Industrial communication method according to one of the claims 1 to 9, **characterised in that** the label is generated by the at least one communication server (9).

11. Industrial communication method according to one of the claims 1 to 10, **characterised in that** the label contains a uniform resource locator via which the at least one industrial apparatus is accessible for the at least one mobile device.

12. Industrial communication method according to one of the claims 1 to 11, **characterised in that** the at least one industrial apparatus is a machine tool.

13. Industrial communication method according to one of the claims 1 to 12, **characterised in that** a first communication connection is activated between the at least one mobile device and a first industrial apparatus (3) by generating, assigning to the first industrial apparatus (3), capturing by the at least one mobile device and recognizing by the at least one communication server (9) a dedicated first label (5) and a second communication connection is activated between the at least one mobile device and a second industrial apparatus (4) by generating, assigning to the second industrial apparatus (4), capturing by the at least one mobile device and recognizing by the at least one communication server (9) a dedicated second label (6).

14. Industrial communication method according to one of the claims 1 to 12, **characterised in that** a first communication connection is activated between a first mobile device (1) and the at least one industrial apparatus for a specified and limited first time period by generating, assigning to the at least one industrial apparatus, capturing by the first mobile device (1) and recognizing by the at least one communication server (9) a dedicated first label (5) and, after expiration of the first time period and deactivation of the first communication connection, a second communication connection is activated between a second mobile device (2) and the at least one industrial apparatus for a specified and limited second time period by generating, assigning to the at least one industrial apparatus, capturing by the second mobile device (2) and recognizing by the at least one communication server (9) a dedicated second label (6).

15. Industrial communication system configured to perform the method according to one of the claims 1 to 14, with at least one mobile device, in particular at least one mobile phone, at least one industrial apparatus, in particular at least one machine, and at least one communication server (9), wherein the at least one mobile device is configured to communicate with the at least one industrial apparatus, **characterised in that** the system is configured to generate a dedicated label for the at least one industrial apparatus and to assign the label to the at least one industrial apparatus, to capture the label with the at least one mobile device, to establish a communication between the at least one mobile device and the at least one communication server (9), wherein the label regarding the at least one industrial apparatus is recognized by the at least one communication server (9), and, based on recognizing the label by the at least one communication server (9), to activate a communication connection between the at least one mobile device and the at least one industrial apparatus.
